# EUROPEAN PATENT SPECIFICATION

(11) **EP 0 682 202 B1**
(45) Date of publication and mention of the grant of the patent: **23.12.1998**
(21) Application number: 94500085.9
(22) Date of filing: 12.05.1994
(51) Int. Cl.: F16L 19/08

(54) **Fittings for pipe coupling**
Fittings für Rohrkupplungen
Accessoires de raccordement pour accoupler des tuyaux

(43) Date of publication of application: 15.11.1995
(73) Proprietor: Martinez Paredes, Jose Luis, E-30080 Molina de Segura (Murcia) (ES)
(72) Inventor: Martinez Paredes, Jose Luis, E-30080 Molina de Segura (Murcia) (ES)
(74) Representative: Alonso Langle, Emilio

(56) References cited:
- EP-A- 0 205 170
- EP-A- 0 583 707
- DE-A- 2 910 688
- DE-C- 716 893
- GB-A- 1 267 007
- US-A- 4 083 587

## Description

### OBJECT OF THE INVENTION

The invention relates to a pipe coupling comprising a pair of threaded fittings especially to those low pressure couplings for plastic or metallic materials, which can be easily and quickly assembled due to the combination of an assembly formed by a trunco-conical fixing ring with a slot in the sense of the generatrices and an inner recess matching with one of the coupling pieces to be threaded or clamped.

The larger base of this fixing ring is located in the supporting plane of one of the opposite spring washers of the sealing joint of these threaded or clamped coupling pieces.

These washers when joined in the layout opposite to that of their actual location would form an isosceles trapezoid identical in size and shape to the third intermediate washer.

The sealing of the coupling is completed by means of two joints, sawtooth-shaped in the inner part of its central bore which can be either square or rectangular in section, as well as another elastic, toric joint located inside one of the front faces of one of these fast coupling fittings.

### BACKGROUND OF THE INVENTION

Irrespective of the coupling system of the pipes or the one used to coupled these with other elements of the line, at their ends or along them, there are a series of special coupling parts.

From the very beginning of the history of the construction of cast piping parts, there were many couplings available, from the simplest ones, using spigot and faucet joints with the pipe ends coupled to each other, to those using specific designs such as Larbil or La Gibault couplings, the swivel joint or Baudois joint, knuckle joint or Petit joint, threaded joint, clamped joint, etc.

Currently, the most widely used couplings are threaded couplings or clamped couplings, although the threaded joint has the inconvenience of its reduced water-tightness considering the increasing trend to elevate the working pressure of the pipings and, on the other hand, the clamped coupling has the inconvenience of its excessive rigidity due to the need to maintain them coplanar in buried layouts normally subject to unexpected movements or deformations.

Therefore, for drinking water mains as well as in the case of irrigations and sewerage there are not really definitive solutions, especially for large lines.

In the conventional layout - which is that of a clamped type, the sealing joint is of the toric type so that the grooved sealing section forms in the locking position a thick band, leak-proof, plane and narrow.

For this clamped layout, the outer coupling element incorporates and inner recess which houses the toric joint in line with its outer finishing so that it is possible to lock it without the need, in this case, to use another set of locking washers but only the one located in the outer part. This would be the easiest solution in the absence of the above-mentioned rigidity problems posed by the coupling.

Patent US-4083587 refers to a pipe coupling comprising a split-ring having an outer conical surface defined by top lands of a plurality of circumferencially-spaced axially extending ribs, the higher end of each rib being formed with an outwardly-projecting step.

Patent DE-2910688 describes, according to the preamble of claim 1, a pair of threaded fittings and a trunco-conical washer inside a trunco-conical recess of one of these fittings.

### DESCRIPTION OF THE INVENTION

The pipe coupling according to the invention is defined in claims 1 and 2.

The pipe coupling consists of a set of coupling means for pipings or between such pipings and the different kinds of fittings. These means are very easy to assemble by combining a trunco-conical bore in the element to be fully introduced in another one which will be the fixing mean of the first one.

Inside the bore there is another trunco-conical washer opposed to such bore so that the end or the base with the smaller diameter of this washer coincides with the smaller diameter of the bore at the full tightening point of the thread or the bolts of the clamp of both piping joining or coupling elements.

This washer incorporates a slot which runs in the sense of the generatrices of such trunco-conical configuration so that both ends of the slot tend to join due to the locking pressure exercised by the quick join elements or fittings.

The end of the piping itself is housed inside such washer and protrudes outside this trunco-conical configuration so that it is coupled when the joint is locked to an inner cylindrical recess made in the coupling element opposed to the trunco-conical recess.

This recess passes through another outer one with the same external dimensions as the larger base of the washer which acts as a securing mean for both resilient sealing joints. The base is located between to metallic asymmetric trapezoidal washers with their outer sides straight, and a third central washer with an isosceles trapezoid configuration of the same size as the other two together if they were joined by their vertical flat sides. This washer which separates both joints serves for a conventional tightening.

Within the preferred execution of this invention, both joints, which serve as a double sealing joint for two quick coupling pieces or fittings, are cylindrical and with a rectangular or squared section, with an inner sawtooth-shaped bore, while the outer tightening washers, with the intermediate washer, tend to compress, due to their trapezoid configuration, the area of each joint which is nearer to the central bore, so that it can expand during the tightening operation, occupying part of the outer protrusion of the inner base of the trapezoid while, on the other hand, it is compressed deforming the inner tooth-shaped configuration of the joints.

A toric joint inside the front face of one of these quick coupling fittings completes the leak-tightness, determining the residual final locking which enables to achieve pressures over 20 bars in the diameters of large pipings.

### DESCRIPTION OF THE DRAWINGS

To complement this description and in an effort to better understand the main characteristics of the invention, a set of drawings is attached to this descriptive report forming an integral part of it and where, as an illustration and without limitation, the following has been represented:

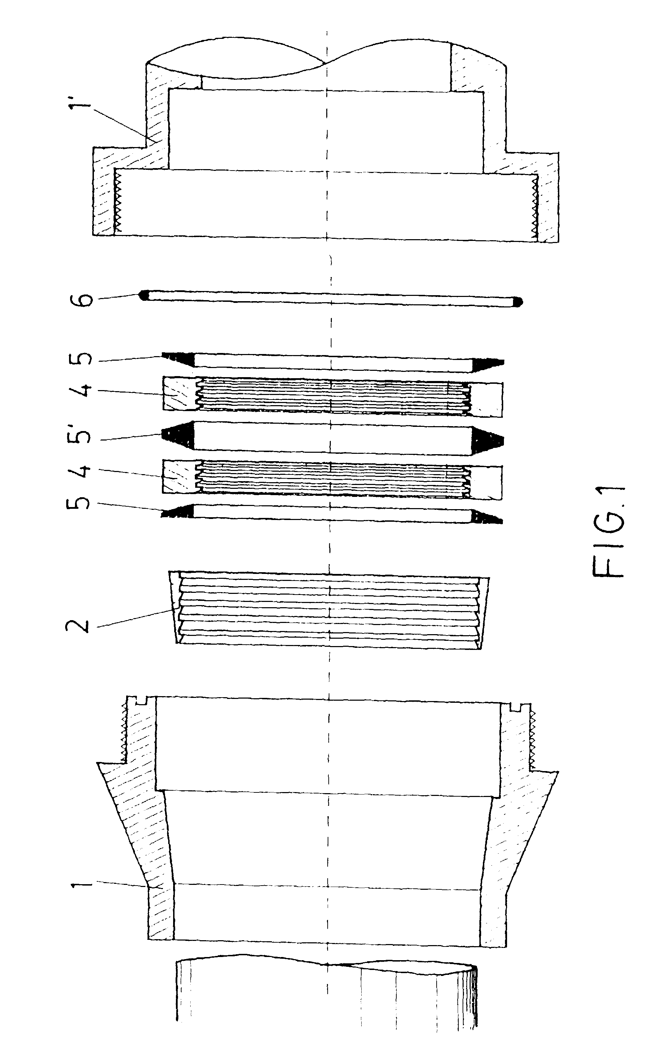

Figure 1 shows a detailed outer section of the coupling which is the object of this invention. This coupling is of a threaded type and the end of the pipe, both coupling elements and inside them the trunco-conical washer with a slot in the sense of the generatrices and the sealing join between both sealing washers can be noticed.

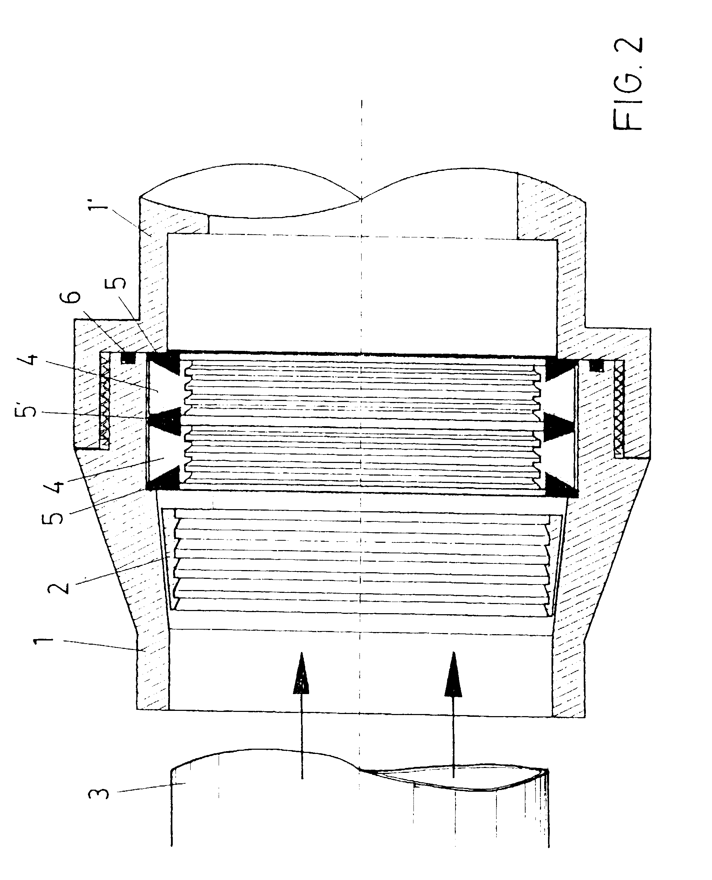

Figure 2 is a longitudinal section in the sense of the pipe axis showing the locked layout of such threaded coupling.

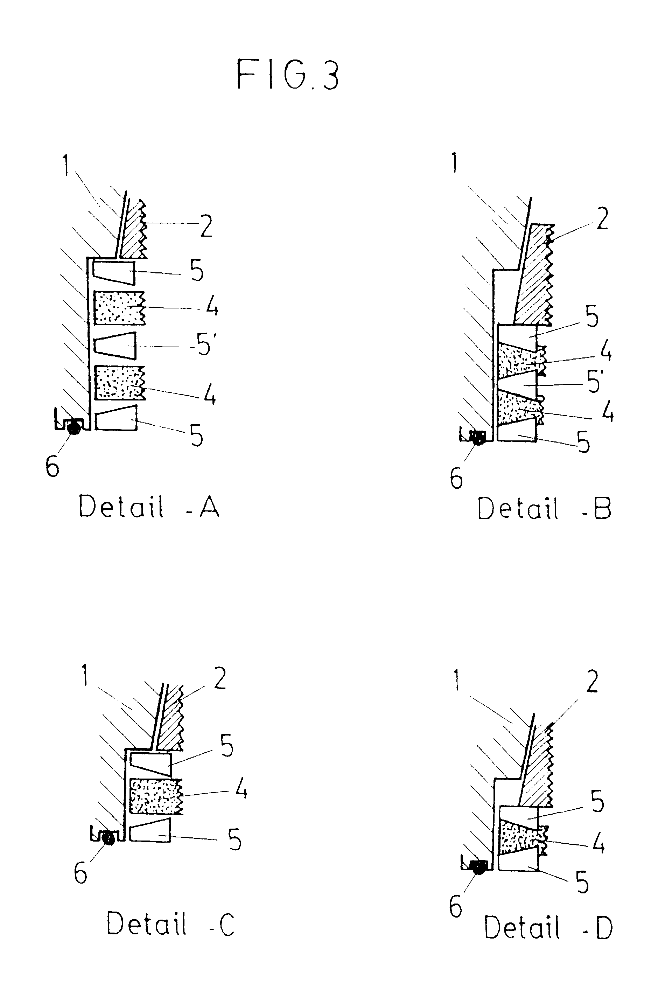

Figure 3 shows in detail the composition of washers and resilient joints as a function of the diameter or the pressure of the piping so that if any of them or both are larger it is configured in accordance with detail drawings A and B, respectively, where the coupling elements are tightened or not. Detail drawings C and D correspond to smaller diameters and/or pressures and, also in this case, the coupling elements are tightened or not.

### PREFERRED EXECUTION OF THE INVENTION

In the light of the above-mentioned figures it can be noticed how this invention consists of a pipe coupling comprising a pair of threaded fittings, very easy to assemble, and which incorporates a trunco-conical washer (2) inside a bore opposite to the fitting (1) with a slot in the sense of the generatrices and where the pipe (3) passes through such washer contacting an inner cylindrical recess of the fitting opposed to the trunco-conical recess.

This recess passes through another one outside it, with the same outer dimension as the larger base of the washer and which constitutes the fixing mean of two resilient sealing joints (4) inserted between two asymmetrical trapezoidal metallic washers (5) with straight outer sides and a third central washer with an isosceles trapezoid configuration (5'). All these joints have a cylindrical shape and a rectangular section with an inner sawtooth-shaped profile. The leaktightness is completed by means of a toric joint (6) inserted in the front face of one or both quick coupling fittings (1) and (1').

Finally, in the case of small diameter pipings or at a very low pressure or in both cases, it suffices to incorporate a singled resilient sealing joint (4) inserted between both metallic asymmetrical trapezoidal washers (5) with straight outer sides, and the toric joint (6) to configured the quick coupling fittings (1) and (1') along with the trunco-conical washer (2).

It is not the intention to describe further this invention since any expert on the subject will be able to understand it easily on the basis of the information provided to appreciate the scope of this invention and its advantages and to reproduce it.

It is understood that, provided that the essentials of this invention are not altered, any variations in the materials or in the shape, size and layout of the elements can be introduced.

The terms used in this description as well as their meaning should always be considered as non-limitative.

## Claims

1. Pipe coupling comprising a pair of threaded fittings (1, 1') and a truncoconical washer (2) having a slot in the sense of its generatices and arranged inside a trunco-conical recess in one of the fittings (1), and a pipe (3) passing through said washer (2) and contacting an inner cylindrical recess of the fitting (1') opposed to the fitting (1) with the trunco-conical recess, characterized in that it comprises a single resilient sealing joint (4), having a cylindrical shape and a rectangular section with an inner sawtooth-shaped bore which is inserted between two trapezoidal asymmetrical metallic washers (5) with straight axially outer side surfaces, one of said metallic washers (5) abutting against a step formed between said trunco-conical recess and an adjacent external cylindrical recess, which is of the same outer dimension as the radially outer base of said washer (5), and a toric joint (6) inserted in front of one of these fittings.

2. Pipe coupling comprising a pair of threaded fittings (1, 1') and a truncoconical washer (2) having a slot in the sense of its generatices and arranged inside a trunco-conical recess in one of the fittings (1), and a pipe (3) passing through said washer (2) and contacting an inner cylindrical recess of the fitting (1') opposed to the fitting (1) with the trunco-conical recess, further comprising two resilient joints (4), each having a cylindrical shape and a rectangular section with an inner sawtooth-shaped bore, which are inserted between two trapezoidal asymmetrical metallic washers (5) with straight axially outer side surfaces, one of said metallic washers (5) abutting against a step formed between said trunco-conical recess and an adjacent external cylindrical recess, which is of the same outer dimension as the radially outer base of said washer (5), a third, central washer (5') with an isosceles trapezoidal configuration between the two joints, and a toric joint (6) inserted in front of one of these fittings.

## Patentansprüche

1. Rohrverbindung, umfassend ein Paar Gewindeanschlußstücke (1, 1') und eine kegelstumpfförmige Unterlegscheibe (2), die einen Schlitz in Richtung ihrer Mantellinien aufweist und an der Innenseite einer kegelstumpfförmigen Vertiefung in einem der Anschlußstücke (1) angebracht ist, sowie ein Rohr (3), das durch besagte Unterlegscheibe (2) führt und eine zylindrische Innenvertiefung des dem Anschlußstück (1) mit der kegelstumpfförmigen Vertiefung gegenüberliegenden Anschlußstückes (1') berührt, dadurch gekennzeichnet, daß sie ein einziges elastisches Dichtungsgelenk (4) in Zylinderform und mit einem rechteckigen Querschnitt mit einer sägezahnförmigen Innenbohrung umfaßt, das zwischen zwei trapezförmigen asymetrischen Metallunterlegscheiben (5) mit geraden axialen Außenflächen eingefügt ist, wobei eine der besagten Metallunterlegscheiben (5) gegen eine zwischen besagter kegelstumpfförmiger Vertiefung und einer anliegenden äußeren zylindrischen Vertiefung, die das gleiche Außenmaß wie die radiale Außengrundfläche der besagten Unterlegscheibe (5) hat, geformte Stufe stößt, sowie ein torisches Gelenk (6), das an der Vorderseite eines dieser Anschlußstücke eingefügt ist.

2. Rohrverbindung, umfassend ein Paar Gewindeanschlußstücke (1, 1') und eine kegelstumpfförmige Unterlegscheibe (2), die einen Schlitz in Richtung ihrer Mantellinien aufweist und an der Innenseite einer kegelstumpfförmigen Vertiefung in einem der Anschlußstücke (1) angebracht ist, sowie ein Rohr (3), das durch besagte Unterlegscheibe (2) führt und eine zylindrische Innenvertiefung des dem Anschlußstück (1) mit der kegelstumpfförmigen Vertiefung gegenüberliegenden Anschlußstückes (1') berührt, dadurch gekennzeichnet, daß sie außerdem zwei elastische Gelenke (4) umfaßt, jedes zylinderförmig und mit einem rechteckigen Querschnitt mit einer sägezahnförmigen Innenbohrung, die zwischen zwei trapezförmigen asymetrischen Metallunterlegscheiben (5) mit geraden axialen Außenflächen eingefügt sind, wobei eine der besagten Metallunterlegscheiben (5) gegen eine zwischen besagter kegelstumpfförmiger Vertiefung und einer anliegenden äußeren zylindrischen Vertiefung, die das gleiche Außenmaß wie die radiale Außengrundfläche der besagten Unterlegscheibe (5) hat, geformte Stufe stößt, eine dritte zentrale Unterlegscheibe (5') mit gleichschenkliger trapezförmiger Konfiguration zwischen den beiden Gelenken, sowie ein torisches Gelenk (6), das an der Vorderseite eines dieser Anschlußstücke eingefügt ist.

## Revendications

1. Accouplement de tuyauterie comprenant une paire de raccords filetés (1, 1') et une rondelle tronconique (2) possédant une f-ente dans le sens de ses génératrices et disposée à l'intérieur d'une cavité tronconique dans l'un des raccords (1) et une tuyauterie (3) qui passe par ladite rondelle (2) et en contact avec une cavité cylindrique intérieure du raccord (1') opposé au raccord (1) dont la cavité est tronconique, caractérisé en ce qu'il comprend un joint d'étanchéité résilient simple (4) ayant une forme cylindrique et une section rectangulaire avec un trou intérieur en dent de scie qui est inséré entre deux rondelles métalliques asymétriques trapézoïdales (5) ayant des surfaces latérales droites axialement extérieures, l'une de ces rondelles métalliques (5) se trouvant en about contre un échelon formé entre ladite cavité tronconique et une cavité cylindrique externe adjacente qui est de la même dimension extérieure que la base radialement extérieure de cette rondelle (5), et un joint torique (6) inséré en face d'un de ces raccords.

2. Accouplement de tuyauterie comprenant une paire de raccords filetés (1, 1') et une rondelle tronconique (2) possédant une fente dans le sens de ses génératrices et disposée à l'intérieur d'une cavité tronconique dans l'un des raccords (1) et une tuyauterie (3) qui passe par ladite rondelle (2) et en contact avec une cavité cylindrique intérieure du raccord (1') opposé au raccord (1) dont la cavité est tronconique, comprenant de plus deux joints résilients (4), chacun ayant une forme cylindrique et une section rectangulaire avec un trou intérieur en dent de scie lesquels sont insérés entre deux rondelles métalliques asymétriques trapézoïdales (5) ayant des surfaces latérales droites axialement extérieures, l'une de ces rondelles métalliques (5) se trouvant en about contre un échelon formé entre ladite cavité tronconique et une cavité cylindrique externe adjacente qui est de la même dimension extérieure que la base radialement extérieure de cette rondelle (5), une troisième rondelle centrale (5') ayant une configuration trapézoïdale isocèle entre les deux joints, et un joint torique (6) inséré en face d'un de ces raccords
